# EUROPEAN PATENT SPECIFICATION

(11) **EP 0 502 688 B1**
(45) Date of publication and mention of the grant of the patent: **02.08.1995**
(21) Application number: 92301789.1
(22) Date of filing: 03.03.1992
(51) Int. Cl.: F16B 19/08

(54) **Cleat for attaching handles to metal containers**
Nieten zum Befestigen von Griffen an Metallbehältern
River pour fixer des poignées sur des récipients métalliques

(30) Priority: 06.03.1991 GB 9104731
(43) Date of publication of application: 09.09.1992
(73) Proprietor: PECHINEY PACKAGING FOOD AND GENERAL LINE LIMITED, Norwich, Norfolk, NR7 9AT (GB)
(72) Inventor: Clarke, Alan Roy, Norwich, Norfolk NR6 7HQ (GB)
(74) Representative: W.P. THOMPSON & CO.

(56) References cited:
- GB-A- 732 283
- GB-A- 1 044 442

## Description

This invention relates to studs or rivets which are used for retaining respective opposite ends of a carrying handle on a container, such as a paint can. Normally, two such studs or rivets are fixed at diametrically opposite positions adjacent to the top of a cylindrical paint can. The invention also relates to a method of making such studs or rivets.

It is known to apply such studs or rivets to a can by rivetting through the can. However, this is relatively costly.

GB 1044442 describes a method of securing a trunnion piece to a container body. A dished metal trunnion piece has its base perforated by a cylindrical punch to create an annular jagged flange which will penetrate a coating on the body so as to make contact for electrical spot-welding.

It is an object of the invention to provide a stud or rivet and a method of making the same which is inexpensive and not wasteful of material.

The stud or rivet of the present invention is to be fixed to the can or other container by projection welding.

In accordance with the present invention there is provided a stud or rivet adapted to be secured to a metal container by projection welding, the stud or rivet having an annular flanged head portion and a shank portion defining a plurality of sharp points, characterised in that the points are formed by the intersection of two shear cuts at right-angles. Because the stud or rivet will normally be welded to a can which has already been painted or lacquered externally, it is necessary for the projection welding process that the stud or rivet has a plurality of sharp projecting points which can penetrate the external paint layer and weld satisfactorily with the metal of the can, such as tin-plate.

The present invention is also concerned with a method of manufacture of studs or rivets for containers, the method comprising the steps of making at least two intersecting shear cuts at right-angles to each other through a piece of strip material, forming the sheared area into a tubular portion having a plurality of sharp points, and removing the stud or rivet from the strip by cutting around the tubular portion thereby to form an annular flanged head portion from which the tubular portion extends.

One presently preferred embodiment of stud or rivet and method of manufacture of studs or rivets in accordance with the invention will now be described by way of example, and with reference to the accompanying drawing, in which:
Fig. 1 is a top plan view of the stud or rivet;
Fig. 2 is a side view of the stud or rivet;
Fig. 3 illustrates how the stud or rivet is manufactured by a shearing and forming process from strip material; and
Fig. 4 shows how the studs or rivets can be made from strip material with minimum wastage.

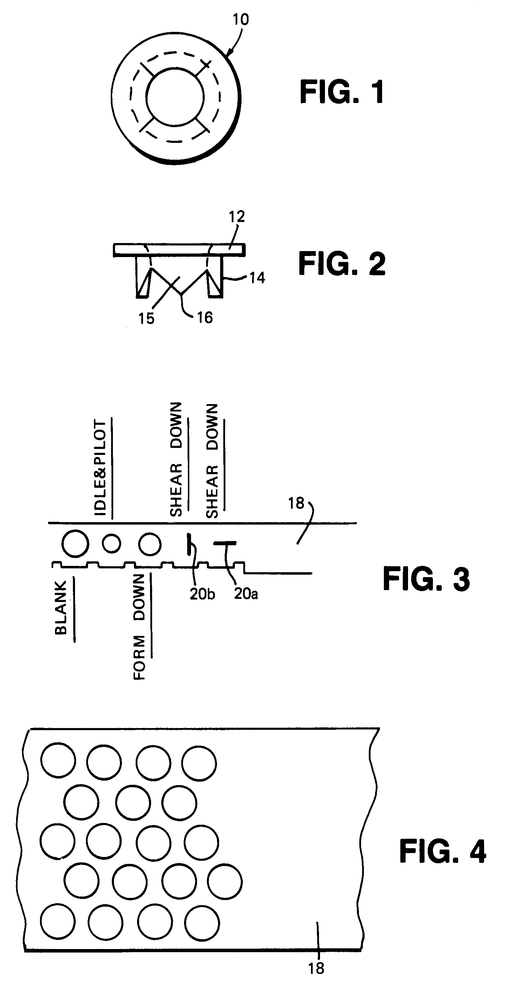

The stud or rivet, which is indicated generally at 10, can be made for example from mild steel having a plate thickness of for example 0.5 mm (0.02"). Alternatively stainless steel can be used. The stud or rivet has a head portion 12 in the form of an annular flange, and a tubular shank portion 14. As shown most clearly in Fig. 2, the tubular shank portion 14 has a configuration such that it defines four equispaced legs 15 with sharp points 16 at the apices of the four generally triangular legs of the shank. Preferably, four such sharp points 16 are provided. In the projection welding process by means of which the stud or rivet is secured to the can (which is a conventional process and will therefore not be described) these sharp points 16 will penetrate through the paint or lacquer on the can to the metal of the can to ensure a satisfactory weld. It is therefore essential that the points 16 are absolutely sharp.

Fig. 3 illustrates how the stud or rivet can be manufactured, in a multi-stage process from metal strip material 18. The stages are carried out in a progression, the strip 18 being advanced in steps past the various working tools. As indicated at the right-hand end of Fig. 3 in the first two stages the strip 18 is sheared through its thickness, in two steps by two shear blades, each along a straight line 20a, 20b respectively, the lines being at right-angles to each other and thus defining a cross. At the next station the cross is located over a hole and a suitable punch is forced downwards on the circular area defined by the ends of the shear lines, making the splits open and thereby creating the generally triangular pointed legs 15 of the shank. Because the points 16 at the apices of the legs are formed by the intersection of two shear cuts at right-angles they are absolutely sharp. At the next station a pilot device is provided to ensure that the pitch is correct and that the holes are accurately in register. At the final station a blanking tool is used to cut the outside circumference, following which the stud or rivet falls through a hole in the press tool into a collecting device.

Although the manufacture of studs or rivets in a single line as shown in Fig. 3 gives good utilisation of material and hence is inexpensive, further savings can be made by the use of multiple tooling and by making the studs or rivets in a plurality of rows across the width of the strip, as shown in Fig. 4. By staggering the rows as shown one keeps waste material to a minimum.

After the stud or rivet has been welded at its points 16 to the can or other container, the carrying handle is fitted over the stud or rivet, to seat behind the annular flanged head 12.

## Claims

1. A stud or rivet adapted to be secured to a metal container by projection welding, the stud or rivet having an annular flanged head portion (12) and a shank portion defining a plurality of sharp points (16), characterised in that the points (16) are formed by the intersection of two shear cuts at right-angles.

2. A stud or rivet as claimed in claim 1, characterised in that the shank portion comprises four equispaced legs (15) around the circumference of the stud or rivet, each leg having a sharp point (16).

3. A method of manufacturing a stud or rivet to be welded to a metal container, the method comprising the steps of making at least two intersecting shear cuts (20a,20b) at right-angles to each other through a piece of strip material (18), forming the sheared area into a tubular stud or rivet portion having a plurality of sharp points (16), and removing the stud or rivet from the strip by cutting around the tubular portion thereby to form an annular flanged head portion (12) from which the tubular portion extends.

## Patentansprüche

1. Ein Bolzen oder Niet zum Befestigen an einem Metallbehälter durch Buckelschweißen, wobei der Bolzen oder Niet einen als Ringflansch ausgebildeten Kopfteil (12) und einen Schaftteil hat, der eine Mehrzahl scharfer Spitzen (16) bildet, **dadurch gekennzeichnet**, daß die Spitzen (16) durch das Einschneiden zweier im rechten Winkel zueinander erfolgender Scherenschnitte geformt sind.

2. Bolzen oder Niet nach Anspruch 1, **dadurch gekennzeichnet**, daß der Schaftteil um den Umfang des Bolzens oder Niets vier gleichbeabstandete Beine (15) aufweist, von denen jedes eine scharfe Spitze (16) hat.

3. Ein Verfahren zum Herstellen eines zum Befestigen an einem Metallbehälter dienenden Bolzens oder Niets, das die Schritte beinhaltet, wenigstens zwei einschneidende Scherenschnitte (20a,20b) in rechten Winkeln zueinander durch ein Stück eines Streifenwerkstoffs (18) durchzuführen, den geschnittenen Bereich in einen rohrförmigen Bolzen- oder Nietteil mit einer Mehrzahl scharfer Spitzen (16) zu verformen, und den Bolzen oder Niet von dem Streifen durch Schneiden um den rohrförmigen Teil herum abzutrennen und dabei einen als Ringflansch ausgebildeten Kopfteil (12) zu formen, von dem aus sich der rohrförmige Teil erstreckt.

## Revendications

1. Crampon ou rivet destiné à être fixé à un conteneur métallique par soudage par projection, le crampon ou rivet ayant une partie de tête (12) à rebord annulaire et une partie de tige définissant plusieurs pointes effilées (16), caractérisé en ce que les pointes (16) sont formées par l'intersection de deux entailles de cisaillage à angle droit.

2. Crampon ou rivet selon la revendication 1, caractérisé en ce que la partie de tige comporte quatre branches équidistantes (15) le long de la circonférence du crampon ou rivet, chaque branche ayant une pointe effilée (16).

3. Procédé de fabrication d'un crampon ou rivet devant être soudé à un conteneur métallique, le procédé comprenant les étapes qui consistent à réaliser au moins deux entailles de cisaillage (20a, 20b) se croisant à angle droit à travers un morceau de bande de matière (18), à former la zone cisaillée en une partie de crampon ou rivet tubulaire ayant plusieurs pointes effilées (16), et à enlever le crampon ou rivet de la bande en découpant autour de la partie tubulaire afin de former une partie de tête (12) à rebord annulaire à partir de laquelle la partie tubulaire s'étend.
